(19) 

**Europäisches Patentamt**
**European Patent Office**
**Office européen des brevets**

(11) **EP 4 606 475 A1**

(12) **EUROPEAN PATENT APPLICATION**
published in accordance with Art. 153(4) EPC

(43) Date of publication:
**27.08.2025 Bulletin 2025/35**

(21) Application number: **23880058.5**

(22) Date of filing: **21.09.2023**

(51) International Patent Classification (IPC):
**B01J 23/00** (2006.01) **B01J 23/02** (2006.01)
**B01J 21/06** (2006.01) **B01J 23/10** (2006.01)
**B01J 23/755** (2006.01) **B01J 37/00** (2006.01)
**B01J 37/04** (2006.01) **B01J 37/08** (2006.01)
**C01B 3/40** (2006.01)

(52) Cooperative Patent Classification (CPC):
**B01J 21/06; B01J 23/00; B01J 23/02; B01J 23/10;**
**B01J 23/755; B01J 23/83; B01J 37/00;**
**B01J 37/04; B01J 37/08; C01B 3/40;** Y02P 20/52

(86) International application number:
**PCT/KR2023/014390**

(87) International publication number:
**WO 2024/085479 (25.04.2024 Gazette 2024/17)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **21.10.2022 KR 20220136338**

(71) Applicant: **LG Chem, Ltd.**
**Yeongdeungpo-gu**
**Seoul 07336 (KR)**

(72) Inventors:
• **KIM, Suji**
**Daejeon 34122 (KR)**
• **CHO, Jun Yeon**
**Daejeon 34122 (KR)**

• **CHOI, Jae Soon**
**Daejeon 34122 (KR)**
• **CHOI, Jun Seon**
**Daejeon 34122 (KR)**
• **KIM, Sangjin**
**Daejeon 34122 (KR)**
• **KIM, Sojin**
**Daejeon 34122 (KR)**
• **KIM, Yongseon**
**Daejeon 34122 (KR)**
• **CHOI, Hyun A**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **CATALYST FOR REFORMING METHANE, METHOD FOR PRODUCING SAME, AND METHOD FOR REFORMING METHANE**

(57) The present application has been made in an effort to provide a catalyst for methane reformation, a method for manufacturing the same, and a methane reforming method.

EP 4 606 475 A1

**Description**

[Technical Field]

The present application claims priority to and the benefit of Korean Patent Application No. 10-2022-0136338 filed in the Korean Intellectual Property Office on October 21, 2022, the entire contents of which are incorporated herein by reference.

The present application relates to a catalyst for methane reformation, a method for manufacturing the same, and a methane reforming method.

[Background Art]

As part of efforts to reduce greenhouse gases caused by global warming, much research is underway on carbon dioxide conversion technologies. A carbon dioxide reforming reaction, one of the carbon dioxide conversion technologies, is a technology that produces a synthesis gas composed of hydrogen and carbon monoxide by reacting methane and carbon dioxide.

The synthesis gas is a material with high development value as a raw material for various downstream applications. As a method for industrially obtaining the synthesis gas ($H_2/CO$), a reforming reaction of natural gas may be largely divided into a steam reforming process, a carbon dioxide ($CO_2$) reforming process, a catalytic partial oxidation process, an autothermal reforming process, a tri-reforming process, such as the following Reaction Schemes 1 to 5, and the like.

[Reaction Scheme 1]      $CH_4 + H_2O \rightarrow 3H_2 + CO$  $\Delta H = 226$ kJ/mol

[Reaction Scheme 2]      $CH_4 + CO_2 \rightarrow 2H_2 + 2CO$  $\triangle H = 261$ kJ/mol

[Reaction Scheme 3]      $CH_4 + 0.5O_2 \rightarrow 2H_2 + CO$  $\triangle H = -44$ kJ/mol

[Reaction Scheme 4]      autothermal reforming: Reaction Scheme 1 + Reaction Scheme 3

[Reaction Scheme 5]      tri-reforming: Reaction Scheme 1 + Reaction Scheme 2 + Reaction Scheme 3

Meanwhile, various catalysts may be used for reforming activity in the reforming process. Among them, when noble metal catalysts are used in the reforming process, there is an advantage in that relatively less carbon deposition occurs compared to nickel-based catalysts, resulting in higher reaction efficiency, but there is a problem in that the economic efficiency deteriorates because the noble metal catalysts are expensive.

Accordingly, nickel catalysts, which are relatively inexpensive, are usually used in the reforming process. In particular, as the nickel catalyst, a catalyst in which nickel metal is supported on a support such as alumina is widely used as a commercial catalyst. However, in such a case, there is a problem in that the nickel catalyst is deactivated by carbon that is inevitably produced on a surface of the nickel catalyst.

Therefore, there is a need in the technical field to develop a catalyst that is resistant to carbon deposition and can be effectively applied to the methane reforming process.

Prior Art Document

Korean Patent Application Publication No. 10-2019-0076367

[Detailed Description of the Invention]

[Technical Problem]

The present application has been made in an effort to provide a catalyst for methane reformation, a method for manufacturing the same, and a methane reforming method.

[Technical Solution]

An exemplary embodiment of the present application provides a perovskite-based catalyst for methane reformation represented by Chemical Formula 1 below.

In addition, another exemplary embodiment of the present application provides a method for manufacturing a catalyst for methane reformation represented by Chemical Formula 1 below, the method including: preparing a solution including a calcium (Ca) precursor, a precursor including A of Chemical Formula 1 below, a zirconium (Zr) precursor, and a precursor including B of Chemical Formula 1 below; stirring the solution; and drying and firing the stirred solution.

[Chemical Formula 1] $\quad Ca_{1-x}A_xZr_{1-y}B_yO_{3-\delta}$

in Chemical Formula 1,

A is Y, La or Ba,
B is Ni, Co, Fe, Mn, Cr, Mo, Ru or Rh,
x is $0 < x < 0.8$,
y is $0 < y < 0.3$, and
$\delta$ is $0 \leq \delta < 1$.

Further, an exemplary embodiment of the present application provides a methane reforming method including: filling a reactor with the catalyst according to the present application; activating the catalyst; supplying a feed gas to the reactor; and applying heat and pressure to the feed gas.

[Advantageous Effects]

The catalyst for methane reformation according to an exemplary embodiment of the present application includes a perovskite-based compound including calcium (Ca), thereby more effectively lowering B site substitution energy by maximizing oxygen vacancy resulting from A site substitution. Accordingly, it is possible to further increase an amount of active metal substituted into a lattice.

Due to these characteristics, the active surface area of the catalyst for methane reformation is increased, good activity can be exhibited even at a high space velocity during a methane reforming reaction, and a long-term stable operation is possible without carbon deposition or sintering.

[Best Mode]

Hereinafter, the present specification will be described in more detail.

Throughout the present specification, when a member is referred to as being "on" another member, the member can be in direct contact with another member or an intervening member may also be present.

In the present specification, when a part is referred to as "including" a certain component, it means that the part can further include another component, not excluding another component, unless explicitly described to the contrary.

The present application is intended to provide a catalyst for methane reformation including a perovskite-based compound including calcium (Ca). Specifically, the present application is intended to provide a catalyst for methane reformation represented by Chemical Formula 1 below.

[Chemical Formula 1] $\quad Ca_{1-x}A_xZr_{1-y}B_yO_{3-\delta}$

in Chemical Formula 1,

A is Y, La or Ba,
B is Ni, Co, Fe, Mn, Cr, Mo, Ru or Rh,
x is $0 < x < 0.8$,
y is $0 < y < 0.3$, and
$\delta$ is $0 \leq \delta < 1$.

That is, the catalyst for methane reformation according to the present application is a perovskite-based catalyst for methane reformation.

With this, it is possible to more effectively lower B site substitution energy by maximizing oxygen vacancy resulting from A site substitution. This means that the amount of active metal to be substituted into a lattice can be further increased, and due to these characteristics, the active surface area of the catalyst for methane reformation is increased, good activity can be exhibited even at a high space velocity during a methane reforming reaction, and a long-term stable operation is possible without carbon deposition or sintering.

In an exemplary embodiment of the present application, the catalyst for methane reformation may be provided in which Chemical Formula 1 above may be represented by Chemical Formula 2 below.

[Chemical Formula 2] $Ca_{1-x}A_xZr_{1-y}B_yO_{3-\delta}$

in Chemical Formula 2,

A is Y, La or Ba,
B is Ni, Co, Fe, Mn, Cr, Mo, Ru or Rh,
x is $0 < x < 0.2$,
y is $0 < y < 0.25$, and
$\delta$ is $0 \leq \delta < 1$.

In an exemplary embodiment of the present application, in Chemical Formula 1 above, A may be Y and B may be Ni.

In the present specification, $\delta$ is a value that satisfies a balance of valences.

In an exemplary embodiment of the present application, the catalyst for methane reformation may be applied to a steam reforming process, a carbon dioxide ($CO_2$) reforming process, a catalytic partial oxidation process, an autothermal reforming process, a tri-reforming process or a mixed reforming process, and the methane reforming process is not particularly limited.

An exemplary embodiment of the present application provides a method for manufacturing a catalyst for methane reformation represented by Chemical Formula 1 above, the method including: preparing a solution including a calcium precursor, a precursor including A of Chemical Formula 1 above, a zirconium precursor, and a precursor including B of Chemical Formula 1 above; stirring the solution; and drying and firing the stirred solution.

**In** addition, in the case of the method for manufacturing a catalyst for methane reformation according to an exemplary embodiment of the present application, Chemical Formula 1 above may be represented by Chemical Formula 2 above.

An exemplary embodiment of the present application provides a method for manufacturing a catalyst for methane reformation represented by Chemical Formula 1 above, the method including: preparing a solution including a calcium precursor, an yttrium precursor, a zirconium precursor, and a nickel precursor; stirring the solution; and drying and firing the stirred solution. That is, there is provided the method for manufacturing a catalyst for methane reformation in which in Chemical Formula 1 above, A is Y and B is Ni.

The method for manufacturing a catalyst for methane reformation according to an exemplary embodiment of the present application has such a feature that it is possible to manufacture the catalyst for methane reformation having an increased active surface area, capable of exhibiting good activity even at a high space velocity during a methane reforming reaction, and enabling a long-term stable operation without carbon deposition or sintering, as described above.

The presence or absence of the carbon deposition can be confirmed by observing a surface of the catalyst using a scanning electron microscope (FE-SEM) (Hitachi S-4800 Scanning Electron Microscope) after the reaction using the catalyst to check whether coke is generated.

In an exemplary embodiment of the present application, the calcium precursor, the precursor including A of Chemical Formula 1 above, the zirconium precursor, and the precursor including B of Chemical Formula 1 above may each be one or more selected from the group consisting of nitrate, carbonate, chloride, and ammonium salt of metal or hydrate of the metal included in the precursor.

In an exemplary embodiment of the present application, the calcium precursor, the yttrium precursor, the zirconium precursor, and the nickel precursor may each be one or more selected from the group consisting of nitrate, carbonate, chloride, and ammonium salt of metal or hydrate of the metal included in the precursor. That is, in Chemical Formula 1 above, A may be Y and B may be Ni.

In an exemplary embodiment of the present application, the calcium precursor may be one or more selected from the group consisting of nitrate, carbonate, chloride, and ammonium salt of calcium or a hydrate of calcium, and may be preferably $Ca(NO_3)_2 \cdot H_2O$, but the present application is not limited thereto.

In an exemplary embodiment of the present application, a precursor including A of Chemical Formula 1 above may be an yttrium precursor.

In an exemplary embodiment of the present application, the yttrium precursor may be one or more selected from the group consisting of nitrate, carbonate, chloride, and ammonium salt of yttrium or a hydrate of yttrium, and may be preferably $Y(NO_3)_2$, but the present application is not limited thereto.

In an exemplary embodiment of the present application, the zirconium precursor may be one or more selected from the group consisting of nitrate, carbonate, chloride, and ammonium salt of zirconium or a hydrate of zirconium, and may be preferably $ZrO(NO_3)_2 \cdot H_2O$, but the present application is not limited thereto.

In an exemplary embodiment of the present application, a precursor including B of Chemical Formula 1 above may be a nickel precursor.

In an exemplary embodiment of the present application, the nickel precursor may be one or more selected from the group consisting of nitrate, carbonate, chloride, and ammonium salt of nickel or a hydrate of nickel, and may be preferably $Ni(NO_3)_2$, but the present application is not limited thereto.

In an exemplary embodiment of the present application, the step of preparing the solution including the calcium precursor, the precursor including A of Chemical Formula 1 above, the zirconium precursor, and the precursor including B of Chemical Formula 1 above may include preparing the calcium precursor, the precursor including A of Chemical Formula 1 above, the zirconium precursor, and the precursor including B of Chemical Formula 1 above, respectively,; and dissolving the calcium precursor, the precursor including A of Chemical Formula 1 above, the zirconium precursor, and the precursor including B of Chemical Formula 1 above in a solvent.

In an exemplary embodiment of the present application, the step of preparing the solution including the calcium precursor, the yttrium precursor, the zirconium precursor, and the nickel precursor may include preparing the calcium precursor, the yttrium precursor, the zirconium precursor, and the nickel precursor, respectively; and dissolving the calcium precursor, the yttrium precursor, the zirconium precursor, and the nickel precursor in a solvent. That is, in Chemical Formula 1 above, A may be Y and B may be Ni.

In an exemplary embodiment of the present application, the solvent may be one or more selected from the group consisting of distilled water, citric acid, ethylene glycol, and urea. In other words, one type of solvent may be selected from the solvents described above and used, but two or more types of solvents may also be selected and used, and preferably both distilled water and citric acid may be used as the solvent.

In an exemplary embodiment of the present application, A of Chemical Formula 1 above in the solution may be 5 mol% to 20 mol%, and preferably 7 mol% to 18 mol%, relative to the calcium in the solution.

In an exemplary embodiment of the present application, yttrium in the solution may be 5 mol% to 20 mol%, and preferably 7 mol% to 18 mol%, relative to the calcium in the solution. That is, A in Chemical Formula 1 above may be Y.

In an exemplary embodiment of the present application, B of Chemical Formula 1 above in the solution may be 3 mol% to 25 mol%, and preferably 5 mol% to 22 mol%, relative to the zirconium in the solution.

In an exemplary embodiment of the present application, nickel in the solution may be 3 mol% to 25 mol%, and preferably 5 mol% to 22 mol%, relative to the zirconium in the solution. That is, B in Chemical Formula 1 above may be Ni.

When the above contents are satisfied, the stability and performance of the catalyst can be further improved.

The above contents can be confirmed in a process of confirming a structure of the catalyst by performing ICP analysis (ICP-OES; Optima 7300DV, PerkinElmer) on the catalyst.

The method for manufacturing a catalyst for methane reformation according to an exemplary embodiment of the present application includes stirring the solution.

In an exemplary embodiment of the present application, the step of stirring the solution may be carried out at temperatures ranging from 60°C to 90°C for 1 hour to 5 hours, preferably at temperatures ranging from 65°C to 85°C for 2 hours to 4 hours, and more preferably at temperatures ranging from 70°C to 80°C for 3 hours, but the present application is not limited thereto.

In an exemplary embodiment of the present application, the method further includes performing drying and firing after stirring the solution. That is, the method further includes performing drying and firing after the step of stirring all the solutions is completed.

In this case, the drying may be carried out at temperatures ranging from 80°C to 180°C for 1 hour to 48 hours, preferably at temperatures ranging from 100°C to 160°C for 5 hours to 36 hours, and more preferably at a temperature of 150°C for 24 hours, but the present application is not limited thereto.

In addition, the firing may be carried out at temperatures ranging from 350°C to 1,100°C for 1 hour to 10 hours under air atmosphere, preferably at temperatures ranging from 500°C to 1,000°C for 1.5 hours to 8 hours under air atmosphere, and more preferably at a temperature of 900°C for 3 hours under air atmosphere, but the present application is not limited thereto.

In the method for manufacturing a catalyst for methane reformation according to an exemplary embodiment of the present application, details on the perovskite-based catalyst component, and the like are the same as those described above.

The catalyst for methane reformation manufactured by the manufacturing method according to an exemplary embodiment of the present application can more effectively lower B site substitution energy by maximizing oxygen vacancy resulting from A site substitution. This means that the amount of active metal to be substituted into a lattice can be further increased, and due to these characteristics, the active surface area of the catalyst for methane reformation is increased, good activity can be exhibited even at a high space velocity during a methane reforming reaction, and a long-term stable operation is possible without carbon deposition or sintering.

An exemplary embodiment of the present application provides a methane reforming method including: filling a reactor with the catalyst according to the present application; activating the catalyst; supplying a feed gas to the reactor;

and applying heat and pressure to the feed gas.

In an exemplary embodiment of the present application, the methane reforming method may be a dry reforming reaction.

In an exemplary embodiment of the present application, the step of activating the catalyst may be a heat treatment at 700°C to 900°C, and preferably 750°C to 850°C under conditions of $H_2/N_2$. In other words, the catalyst may be activated through a reduction process.

More specifically, the step of activating the catalyst may be carried out under conditions of 5% to 15%, preferably 7% to 12%, and more preferably 10% $H_2/N_2$.

In an exemplary embodiment of the present application, the feed gas may include methane ($CH_4$) and carbon dioxide ($CO_2$). In addition, the feed gas may further include an inert gas.

In an exemplary embodiment of the present application, the feed gas may include methane ($CH_4$), carbon dioxide ($CO_2$), and nitrogen ($N_2$). When the feed gas includes methane ($CH_4$), carbon dioxide ($CO_2$), and nitrogen ($N_2$), a volume ratio of the feed gas may be $CH_4: CO_2: N_2 = 1:1$ to $1.4:0.1$ to 1.

That is, a volume of carbon dioxide in the feed gas may be 1 to 1.4 times a volume of methane, and a volume of nitrogen in the feed gas may be 0.1 to 1 times the volume of methane.

In an exemplary embodiment of the present application, in the step of supplying the feed gas to the reactor, a weight hourly space velocity (WHSV) of the feed gas may be 3,000 hr$^{-1}$ to 100,000hr$^{-1}$, and preferably 20,000hr$^{-1}$ to 50,000hr$^{-1}$.

In an exemplary embodiment of the present application, the step of applying heat and pressure to the feed gas may be carried out at a temperature condition ranging from 700°C to 900°C, and preferably 750°C to 850°C and at a pressure condition of 0.5 bar to 1.5 bar, and preferably 0.8 bar to 1.2 bar.

In an exemplary embodiment of the present application, the step of applying heat and pressure to the feed gas may be carried out over 20 hours or longer.

For the methane reforming method of the present application, a method commonly used in a methane reforming method or a dry reforming reaction may be applied, except for using the catalyst according to the present application.

Mode for Invention

Below, Examples will be described in detail for specifically describing the present application. However, the Examples according to the present application may be modified in other forms, and the scope of the present application is not construed as being limited to the Examples described in detail below. The Examples of the present application are provided to more completely explain the present application to one skilled in the art.

**<Example 1>**

A solution was prepared by putting $Ca(NO_3)_2 \cdot H_2O$, $Y(NO_3)_2$, $ZrO(NO_3)_2 \cdot H_2O$ and $Ni(NO_3)_2$ into a reaction flask and dissolving the same by adding citric acid and distilled water. In this case, the contents of the materials were adjusted so that yttrium (Y) in the solution was 8 mol% relative to a sum of calcium (Ca) and yttrium (Y) and nickel (Ni) was 10 mol% relative to a sum of zirconium (Zr) and nickel (Ni).

The solution was stirred at a temperature of about 75°C for 3 hours. About 75°C refers to a temperature ranging from 70°C to 80°C. Thereafter, the solution was dried at a temperature of 150°C for 24 hours. Then, the dried material was subjected to heat treatment at a temperature of 900°C for 3 hours under an air atmosphere to prepare a catalyst.

Thereafter, the structure of the catalyst was confirmed through ICP analysis (ICP-OES; Optima 7300DV, PerkinElmer). Specifically, about 0.01 g of the prepared catalyst was put into 40 ml of a mixed solution of hydrochloric acid and nitric acid (volume ratio of hydrochloric acid and nitric acid= 3:1), which was then reacted at room temperature for 1 hour. Thereafter, the mixed solution was heated at 150°C for 3 hours and cooled slowly. After confirming that the sample was dissolved, 100 $\mu$l of a standard material (Sc, 1,000 ppm) was added and diluted to a total of 10 ml with distilled water. Then, the final concentration and measurement mode were adjusted to measure a concentration of each element.

As a result of checking the structure of the prepared catalyst, it was confirmed that the catalyst of $Ca_{0.92}Y_{0.08}Zr_{0.90}Ni_{0.10}O_{3-\delta}$ was prepared.

**<Example 2>**

A catalyst was prepared in the same manner as in Example 1, except that the content of the material was adjusted so that nickel (Ni) in the solution was 15 mol% relative to the sum of zirconium (Zr) and nickel (Ni).

In addition, the structure of the catalyst was confirmed by ICP analysis (ICP-OES; Optima 7300DV, PerkinElmer) under the same conditions as in Example 1.

As a result of checking the structure of the prepared catalyst, it was confirmed that the catalyst of

$Ca_{0.92}Y_{0.08}Zr_{0.85}Ni_{0.15}O_{3-\delta}$ was prepared.

**<Example 3>**

A catalyst was prepared in the same manner as in Example 1, except that the content of the material was adjusted so that nickel (Ni) in the solution was 20 mol% relative to the sum of zirconium (Zr) and nickel (Ni).

In addition, the structure of the catalyst was confirmed by ICP analysis (ICP-OES; Optima 7300DV, PerkinElmer) under the same conditions as in Example 1.

As a result of checking the structure of the prepared catalyst, it was confirmed that the catalyst of $Ca_{0.92}Y_{0.08}Zr_{0.80}Ni_{0.20}O_{3-\delta}$ was prepared.

**<Example 4>**

A catalyst was prepared in the same manner as in Example 1, except that the content of the material was adjusted so that yttrium (Y) in the solution was 16 mol% relative to the sum of calcium (Ca) and yttrium (Y).

In addition, the structure of the catalyst was confirmed by ICP analysis (ICP-OES; Optima 7300DV, PerkinElmer) under the same conditions as in Example 1.

As a result of checking the structure of the prepared catalyst, it was confirmed that the catalyst of $Ca_{0.84}Y_{0.16}Zr_{0.90}Ni_{0.10}O_{3-\delta}$ was prepared.

**<Comparative Example 1>**

A catalyst was prepared in the same manner as in Example 1, except that only $Ca(NO_3)_2 \cdot H_2O$, $ZrO(NO_3)_2 \cdot H_2O$ and $Ni(NO_3)_2$ were put into the reaction flask without adding $Y(NO_3)_2$.

In addition, the structure of the catalyst was confirmed by ICP analysis (ICP-OES; Optima 7300DV, PerkinElmer) under the same conditions as in Example 1.

As a result of checking the structure of the manufactured catalyst, it was confirmed that the catalyst of $CaZr_{0.90}Ni_{0.10}O_{3-\delta}$ was prepared.

**<Comparative Example 2>**

A catalyst was prepared in the same manner as in Example 1, except that the content of the material was adjusted so that yttrium (Y) in the solution was 80 mol% relative to calcium (Ca).

In addition, the structure of the catalyst was confirmed by ICP analysis (ICP-OES; Optima 7300DV, PerkinElmer) under the same conditions as in Example 1.

As a result of checking the structure of the prepared catalyst, it was confirmed that the catalyst of $Ca_{0.20}Y_{0.80}Z1_{0.90}Ni_{0.10}O_{3-\delta}$ was prepared.

**<Comparative Example 3>**

A catalyst was prepared in the same manner as in Example 1, except that only $Ca(NO_3)_2 \cdot H_2O$ and $ZrO(NO_3)_2 \cdot H_2O$ were put into the reaction flask without adding $Y(NO_3)_2$ and $Ni(NO_3)_2$.

In addition, the structure of the catalyst was confirmed by ICP analysis (ICP-OES; Optima 7300DV, PerkinElmer) under the same conditions as in Example 1.

As a result of checking the structure of the prepared catalyst, it was confirmed that the catalyst of $CaZrO_3$ was prepared.

The structures of the catalysts of Examples 1 to 4 and Comparative Examples 1 to 3 are listed in Table 1 below.

[Table 1]

|  | Structure (Chemical Formula) of Catalyst |
|---|---|
| Example 1 | $Ca_{0.92}Y_{0.08}Zr_{0.90}Ni_{0.10}O_{3-\delta}$ |
| Example 2 | $Ca_{0.92}Y_{0.08}Z1_{0.85}Ni_{0.15}O_{3-\delta}$ |
| Example 3 | $Ca_{0.92}Y_{0.08}Zr_{0.80}Ni_{0.20}O_{3-\delta}$ |
| Example 4 | $Ca_{0.84}Y_{0.16}Zr_{0.90}Ni_{0.10}O_{3-\delta}$ |
| Comparative Example 1 | $CaZr_{0.90}Ni_{0.10}O_{3-\delta}$ |

(continued)

|  | Structure (Chemical Formula) of Catalyst |
|---|---|
| Comparative Example 2 | $Ca_{0.20}Y_{0.80}Zr_{0.90}Ni_{0.10}O_{3-\delta}$ |
| Comparative Example 3 | $CaZrO_3$ |

### <Experimental Example 1>

About 1 g of the catalyst of Example 1 was filled into a quartz tube reactor with an internal diameter of 1/2 inch and a length of 50 cm, and the catalyst was activated through a reduction process at a temperature of 800°C for 2 hours under conditions of 10% $H_2/N_2$.

Thereafter, while supplying the feed gas satisfying the volume ratio of $CH_4$: $CO_2$: $N_2$=1:1.2:0.96 to the reactor so as to meet a weight hourly space velocity (WHSV) of 30,000hr$^{-1}$, the dry reforming reaction was carried out at a temperature condition of 800°C and a pressure condition of 1 bar for 24 hours.

After the reaction was completed, the gas composition inside the reactor was analyzed using gas chromatography (GC), and results are shown in Table 2 below.

Then, the dry reforming method was performed in the same manner as the above-described method, except that one of the catalysts of Examples 2 to 4 and Comparative Examples 1 to 3 was used instead of the catalyst of Example 1, the gas composition inside the reactor was analyzed after the reaction was completed, and results are shown in Table 2 below.

### <Experimental Example 2>

A dry reforming reaction was conducted for 24 hours using the same method and conditions as in Experimental Example 1. After the reaction, the catalyst was collected, which was then subjected to an analysis of thermal decomposition behavior through thermogravimetric analyzer (TGA). Thermal decomposition conditions were such that a temperature was increased to 800°C at a temperature rising rate of 10°C/min under an air atmosphere. In this case, a weight loss of the catalyst between 400°C and 600°C was considered as coke, and this was converted to a weight ratio (wt%).

The results are shown in Table 2 below.

[Table 2]

| Catalyst used | XCH$_4$ (%) | XCO$_2$ (%) | H$_2$/CO ratio | Coke (wt%) |
|---|---|---|---|---|
| Example 1 | 80.9 | 81.3 | 0.82 | 2.5 |
| Example 2 | 87.1 | 88.1 | 0.86 | 4.1 |
| Example 3 | 92 | 91.5 | 0.9 | 5.9 |
| Example 4 | 90.3 | 90.9 | 0.89 | 3.8 |
| Comparative Example 1 | 43.5 | 51.2 | 0.63 | 7.8 |
| Comparative Example 2 | 13.5 | 17.4 | 0.35 | 13.5 |
| Comparative Example 3 | 0 | 0 | 0 | 0 |

XCH$_4$ and XCO$_2$ in Table 2 above refer to conversion rates of $CH_4$ and $CO_2$ in the feed gas, respectively, and the values can be obtained using Equations 1 and 2 below.

[Equation 1]

$$XCH_4(\%) = \{(F_{CH4,in} - F_{CH4,out})/F_{CH4,in}\} \times 100(\%)$$

($F_{CH4,in}$: flow rate of $CH_4$ supplied to reactor, $F_{CH4,out}$: flow rate of $CH_4$ discharged from reactor)

[Equation 2]

$$XCO_2(\%) = \{(F_{CO2,in} - F_{CO2,out})/F_{CO2,in}\} \times 100(\%)$$

($F_{CO2,in}$: flow rate of $CO_2$ supplied to reactor, $F_{CO2, out}$: flow rate of $CO_2$ discharged from reactor)

In addition, $H_2/CO$ ratio refers to a ratio of $H_2$ and CO after completion of reaction.

From the results in Table 2 above, it could be confirmed that the catalysts of Examples 1 to 4 were superior to the catalysts of Comparative Examples 1 and 2 in terms of the life of catalyst by reducing the amount of coke generation. In Comparative Example 3, coke was not generated, but it could be confirmed that it was difficult to believe that the catalyst was performing its function, when seeing the conversion rates of $CH_4$ and $CO_2$.

In addition, when some of the materials included in the catalysts according to the present Examples are not included, as in Comparative Examples 1 and 3, it could be confirmed that the conversion rates of $CH_4$ and $CO_2$ were low and the ratio of $H_2$ and CO after completion of the reaction was low. In particular, in the case of Comparative Example 3, it could be confirmed that the conversion rates of $CH_4$ and $CO_2$ were low enough to make it difficult to believe that the catalyst was performing its function and the ratio of $H_2$ and CO after completion of the reaction was low.

This means that methane reformation does not occur efficiently when the catalysts of Comparative Examples 1 and 3 are used.

In addition, in the case of Comparative Example 2, the materials included in the catalysts according to the present Examples were included, but it could be confirmed that the content of calcium (Ca) was low and the content of yttrium (Y) was high, unlike the catalysts according to the present Examples. In the case of the catalyst of Comparative Example 2, it could be confirmed that the conversion rates of $CH_4$ and $CO_2$ were lower and the ratio of $H_2$ and CO after completion of the reaction was lower, as compared with Comparative Example 1 in which some of the materials included in the catalysts according to the present Examples were not included.

That is, it could be confirmed that even if the same material is included, when a catalyst that does not satisfy the structure of Chemical Formula 1 of the present application is used, the methane reformation does not occur efficiently.

That is, as can be seen from the results in Table 2, in the case of the catalysts according to the present Examples, it could be confirmed that the active surface area of the catalyst for methane reformation increases, good activity can be shown even at high space velocities during the methane reforming reaction, and a long-term stable operation is possible without carbon deposition or sintering.

**Claims**

1. A catalyst for methane reformation represented by Chemical Formula 1 below:

   [Chemical Formula 1] $\quad$ $Ca_{1-x}A_xZr_{1-y}B_yO_{3-\delta}$

   in Chemical Formula 1,

   A is Y, La or Ba,
   B is Ni, Co, Fe, Mn, Cr, Mo, Ru or Rh,
   x is $0 < x < 0.8$,
   y is $0 < y < 0.3$, and
   $\delta$ is $0 \leq \delta < 1$.

2. The catalyst for methane reformation of claim 1, wherein Chemical Formula 1 above is represented by Chemical Formula 2 below:

   [Chemical Formula 2] $\quad$ $Ca_{1-x}A_xZr_{1-y}B_yO_{3-\delta}$

   in Chemical Formula 2,

   A is Y, La or Ba,
   B is Ni, Co, Fe, Mn, Cr, Mo, Ru or Rh,
   x is $0 < x < 0.2$,
   y is $0 < y < 0.25$, and
   $\delta$ is $0 \leq \delta < 1$.

3. The catalyst for methane reformation of claim 1, wherein in Chemical Formula 1 above, A is Y and B is Ni.

4. The catalyst for methane reformation of claim 1, wherein the catalyst for methane reformation is applied to a steam reforming process, a carbon dioxide ($CO_2$) reforming process, a catalytic partial oxidation process, an autothermal reforming process, a tri-reforming process, or a mixed reforming process.

5.  A method for manufacturing a catalyst for methane reformation represented by Chemical Formula 1 below, the method comprising:

> preparing a solution comprising a calcium (Ca) precursor, a precursor comprising A of Chemical Formula 1 below, a zirconium (Zr) precursor, and a precursor comprising B of Chemical Formula 1 below;
> stirring the solution; and
> drying and firing the stirred solution:

> [Chemical Formula 1] $\quad$ $Ca_{1-x}A_xZr_{1-y}B_yO_{3-\delta}$

> in Chemical Formula 1,
> A is Y, La or Ba,
> B is Ni, Co, Fe, Mn, Cr, Mo, Ru or Rh,
> x is $0 < x < 0.8$,
> y is $0 < y < 0.3$, and
> $\delta$ is $0 \leq \delta < 1$.

6.  The method of claim 5, wherein the calcium precursor, the precursor comprising A of Chemical Formula 1 above, the zirconium precursor, and the precursor comprising B of Chemical Formula 1 above are each one or more selected from the group consisting of nitrate, carbonate, chloride, and ammonium salt of metal or hydrate of the metal included in the precursor.

7.  The method of claim 5, wherein A of Chemical Formula 1 above in the solution is 5 mol% to 20 mol% relative to calcium in the solution.

8.  The method of claim 5, wherein B of Chemical Formula 1 above in the solution is 3 mol% to 25 mol% relative to zirconium in the solution.

9.  The method of claim 5, wherein Chemical Formula 1 above is represented by Chemical Formula 2 below:

> [Chemical Formula 2] $\quad$ $Ca_{1-x}A_xZr_{1-y}B_yO_{3-\delta}$

in Chemical Formula 2,

> A is Y, La or Ba,
> B is Ni, Co, Fe, Mn, Cr, Mo, Ru or Rh,
> x is $0 < x < 0.2$,
> y is $0 < y < 0.25$, and
> $\delta$ is $0 \leq \delta < 1$.

10. The method of claim 5, wherein in Chemical Formula 1 above, A is Y and B is Ni.

11. A methane reforming method comprising:

> filling a reactor with the catalyst for methane reformation according to any one of claims 1 to 4;
> activating the catalyst;
> supplying a feed gas to the reactor; and
> applying heat and pressure to the feed gas.

## INTERNATIONAL SEARCH REPORT

| International application No. |
| --- |
| **PCT/KR2023/014390** |

### A. CLASSIFICATION OF SUBJECT MATTER

**B01J 23/00**(2006.01)i; **B01J 23/02**(2006.01)i; **B01J 21/06**(2006.01)i; **B01J 23/10**(2006.01)i; **B01J 23/755**(2006.01)i; **B01J 37/00**(2006.01)i; **B01J 37/04**(2006.01)i; **B01J 37/08**(2006.01)i; **C01B 3/40**(2006.01)i

According to International Patent Classification (IPC) or to both national classification and IPC

### B. FIELDS SEARCHED

Minimum documentation searched (classification system followed by classification symbols)

B01J 23/00(2006.01); B01J 23/16(2006.01); B01J 23/78(2006.01); B01J 23/83(2006.01); B01J 23/89(2006.01); B01J 27/224(2006.01); B01J 29/06(2006.01); C01B 3/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 메탄(methane), 개질 촉매(reforming catalyst), 칼슘(calcium), 지르코늄(zirconium), 이트륨(yttrium), 니켈(nickel)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2004-0042889 A (L'AIR LIQUIDE, SOCIETE ANONYME A DIRECTOIRE ET CONSEIL DE SURVEILLANCE POUR LETUDE ET LEXPLOITATION DES PROCEDES GEORGES CLAUDE) 20 May 2004 (2004-05-20) See abstract; claims 1-14; and paragraphs [0057]-[0072]. | 1,2,4-9,11 |
| Y | | 3,10 |
| Y | CN 105688916 A (SHANGHAI ADVANCED RESEARCH INSTITUTE, CHINESE ACADEMY OF SCIENCES et al.) 22 June 2016 (2016-06-22) See abstract; and claims 1 and 11. | 3,10 |
| A | WO 2016-011240 A1 (SABIC GLOBAL TECHNOLOGIES B.V. et al.) 21 January 2016 (2016-01-21) See entire document. | 1-11 |
| A | WO 00-16901 A1 (THE UNIVERSITY OF QUEENSLAND) 30 March 2000 (2000-03-30) See entire document. | 1-11 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 January 2024** | **15 January 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2023/014390** |

### C. DOCUMENTS CONSIDERED TO BE RELEVANT

| Category* | Citation of document, with indication, where appropriate, of the relevant passages | Relevant to claim No. |
|---|---|---|
| A | CN 113117712 A (XIANGTAN UNIVERSITY) 16 July 2021 (2021-07-16)<br>See entire document. | 1-11 |

Form PCT/ISA/210 (second sheet) (July 2022)

**INTERNATIONAL SEARCH REPORT**
Information on patent family members

International application No.

**PCT/KR2023/014390**

| Patent document cited in search report | | | Publication date (day/month/year) | Patent family member(s) | | | Publication date (day/month/year) |
|---|---|---|---|---|---|---|---|
| KR | 10-2004-0042889 | A | 20 May 2004 | EP | 1419814 | A1 | 19 May 2004 |
| | | | | JP | 2004-167485 | A | 17 June 2004 |
| | | | | JP | 4505208 | B2 | 21 July 2010 |
| | | | | US | 2004-0127351 | A1 | 01 July 2004 |
| | | | | US | 7329691 | B2 | 12 February 2008 |
| CN | 105688916 | A | 22 June 2016 | CN | 105688916 | B | 26 October 2018 |
| WO | 2016-011240 | A1 | 21 January 2016 | CN | 106660020 | A | 10 May 2017 |
| | | | | EP | 3169433 | A1 | 24 May 2017 |
| | | | | EP | 3169433 | A4 | 27 June 2018 |
| | | | | US | 10357759 | B2 | 23 July 2019 |
| | | | | US | 2017-0120227 | A1 | 04 May 2017 |
| WO | 00-16901 | A1 | 30 March 2000 | AU | 6182399 | A | 10 April 2000 |
| | | | | EP | 1173277 | A1 | 23 January 2002 |
| | | | | EP | 1173277 | A4 | 31 July 2002 |
| CN | 113117712 | A | 16 July 2021 | CN | 113117712 | B | 01 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220136338

- KR 1020190076367